# EUROPEAN PATENT APPLICATION

(11) **EP 4 617 305 A1**
(43) Date of publication of application: **17.09.2025**
(21) Application number: 24803638.6
(22) Date of filing: 30.04.2024
(51) Int. Cl.: C08J 11/08, C08L 23/06, C08L 23/12

(54) **METHOD FOR PREPARING RECYCLED POLYMERS**

(30) Priority: 09.05.2023 KR 20230059632; 26.04.2024 KR 20240055992
(71) Applicant: LG CHEM, LTD., Seoul 07336 (KR); Chungbuk National University Industry-Academic Cooperation Foundation, Cheongju-si, Chungcheongbuk-do 28644 (KR)
(72) Inventor: LIM, Yong Chan, Daejeon 34122 (KR); RYU, Sang Woog, Sejong 30098 (KR); PARK, Jong Suh, Daejeon 34122 (KR); OH, Hyun Taek, Daejeon 34122 (KR); LEE, Sang Ho, Daejeon 34122 (KR); KIM, Jun Sik, Daejeon 34122 (KR); SHIN, Dong Jin, Cheongju-si Chungcheongbuk-do 28665 (KR); PARK, Young Jin, Pyeongtaek-si Gyeonggi-do 17886 (KR)
(74) Representative: Hoffmann Eitle
(86) International application number: PCT/KR2024/005868
(87) International publication number: WO 2024/232584

(57) **Abstract**

Provided is a method of preparing a recycled polymer including: preparing a mixed solvent including a first solvent and a second solvent and supplying the mixed solvent in each of a dissolution tank and a precipitation tank, supplying and dissolving a composite resin in the dissolution tank to obtain a dissolved mixture, filtering the dissolved mixture to obtain a polymer solution, and supplying the polymer solution in the precipitation tank and performing recrystallization to obtain a precipitated mixture including a recycled polymer.

## Description

### [Technical Field]

### CROSS-REFERENCE TO RELATED APPLICATIONS

The present application claims the benefit of priorities to Korean Patent Application No. 10-2023-0059632, filed on May 9, 2023, and Korean Patent Application No. 10-2024-0055992, filed on April 26, 2024, the entire contents of which are incorporated herein as a part of the specification.

### Technical Field

The present invention relates to a method of preparing a recycled polymer, and more particularly, to a method of preparing a recycled polymer from a composite resin using a mixed solvent.

### [Background Art]

Recently, since resin materials having physical properties required for various uses and purposes have been developed, the use of polymer materials such as resins or plastics is increasing. In general, resins or plastics use a lot of energy from crude oil collection to manufacture, and a large amount of carbon is discharged in the process. Furthermore, in the case in which a final product is discarded and resins or plastics included in the product are also discarded, social costs for environmental pollution and the treatment thereof are incurred. Thus, it is essential to recycle waste resins in order to reduce energy consumption, reduce carbon emission, and prevent environmental pollution.

Herein, the waste resin may be a resin of a composite material or a single resin, and it is difficult for the resin of a composite material to be recycled in a state of a blend of two or more resins, and it is also difficult for the single resin to be recycled, since the single resin contains additives (such as plasticizers, fillers, flame retardants, stabilizers, fillings, foaming agents, viscosity lowering agents, colorants, and heat stabilizers) used for imparting desired physical properties during the manufacture of the single resin.

Therefore, it has been conventional that the preparation of the recycled polymer from the waste resins comprises selectively dissolving a polymer included in the waste resin in a good solvent to obtain a polymer solution, and evaporating the good solvent included in the polymer solution or bringing the polymer solution into contact with an antisolvent to perform recrystallization.

However, in the evaporation of the good solvent included in the polymer solution, heat energy used for removing the good solvent included in the polymer solution is excessively increased. Meanwhile, the recrystallization by bringing the polymer solution into contact with an antisolvent may make it difficult to recycle a residual solvent remaining after obtaining the recycled polymer recrystallized in the antisolvent, and may be economically not preferred in that a separate process for separating the residual solvent into a good solvent and an antisolvent is further needed.

### [Disclosure]

### [Technical Problem]

In order to solve the problems mentioned in the Background Art, an object of the present invention is to provide a method of preparing a recycled polymer which may be recycled without additional separation by recovering a mixed solvent from a precipitated mixture simultaneously with obtaining a recycled polymer from a waste resin.

### [Technical Solution]

In one general aspect, a method of preparing a recycled polymer includes: preparing a mixed solvent including a first solvent and a second solvent and supplying the mixed solvent in each of a dissolution tank and a precipitation tank; supplying and dissolving a composite resin in the dissolution tank to obtain a dissolved mixture; filtering the dissolved mixture to obtain a polymer solution; and supplying the polymer solution in the precipitation tank and performing recrystallization to obtain a precipitated mixture including a recycled polymer.

### [Advantageous Effects]

According to the method of preparing a recycled polymer, a mixed solvent including a first solvent which is excellent for dissolution of a polymer and a second solvent which is easy to recrystallize a dissolved polymer is used, whereby the mixed solvent may serve as both a dissolution solvent which dissolves a polymer and a precipitation solvent which recrystallizes a dissolved polymer.

In addition, a weight ratio between the first solvent and the second solvent in the mixed solvent is controlled, thereby maximizing a function of the mixed solvent as a dissolution solvent or as a precipitation solvent depending on temperature control of the mixed solvent, and furthermore, also taking a process advantage.

Specifically, the mixed solvent is recovered from the precipitated mixture obtained in the precipitation tank, and then can be directly supplied in the dissolution tank or the precipitation tank without additional separation. This brings into process simplification and low costs, which may be preferred in terms of an economic aspect.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail for better understanding of the present invention.

The method of preparing a recycled polymer according to an exemplary embodiment of the present invention may include: preparing a mixed solvent including a first solvent and a second solvent and supplying the mixed solvent in each of a dissolution tank and a precipitation tank; supplying and dissolving a composite resin in the dissolution tank to obtain a dissolved mixture; filtering the dissolved mixture to obtain a polymer solution; and supplying the polymer solution in the precipitation tank and performing recrystallization to obtain a precipitated mixture including a recycled polymer.

First, in the method of preparing a recycled polymer according to an exemplary embodiment of the present invention, a mixed solvent including a first solvent and a second solvent is prepared and the mixed solvent is supplied in each of a dissolution tank and a precipitation tank.

The first solvent is a solvent which may dissolve a polymer to be dissolved in the present invention more easily, and may have a function of maximizing dissolution ability in dissolving a polymer. Herein, the dissolution ability may refer to a degree or ability to selectively dissolve a polymer included in a composite resin. That is, the first solvent may be a solvent which performs a function of dissolving only a polymer which requires dissolution for preparing a recycled polymer among the polymers included in the composite resin. Herein, the polymer may include at least one selected from polyethylene and polypropylene, as described later.

More specifically, the first solvent may be an aromatic solvent, and may include at least one selected from ortho-xylene, meta-xylene, para-xylene, and toluene. Preferably, the first solvent may be toluene. The first solvent may be a solvent having a characteristic of maximized dissolution ability of the polymer in a certain temperature range, but decreased dissolution ability of the polymer at a temperature out of the certain temperature range. Herein, the certain temperature range may be 80 to 130°C. That is, the first solvent has maximized dissolution ability of one or more polymers of polyethylene and polypropylene in a range of 80 to 130°C, but has relatively decreased dissolution ability of the polymer at a temperature of, for example, lower than 80°C.

Meanwhile, the second solvent is a solvent which may recrystallize the polymer in the polymer solvent obtained by filtering the dissolved mixture in which the composite resin is dissolved, and may have a function of maximizing precipitation ability in recrystallizing the dissolved polymer. Herein, the precipitation ability may refer to a degree or ability to recrystallize the polymer (dissolved polymer) in the polymer solution.

Meanwhile, the second solvent also has a function as a dissolution solvent which dissolves the polymer, but the ability of the second solvent to dissolve the polymer is lower than that of the first solvent. Therefore, the dissolution ability of the first solvent may be higher than that of the second solvent even in a temperature range where the second solvent functions as a dissolution solvent. However, when the second solvent is mixed with the first solvent at a certain ratio and used as a dissolution solvent at a temperature of 80°C or higher, it may show a significantly higher dissolution ability than the dissolution ability when the first solvent is used alone as the dissolution solvent. Herein, the certain ratio, that is, a weight ratio between the first solvent and the second solvent may be 1:9 to 5:5. Generally, when a mixed solvent in which two or more solvents are mixed is used, the solubility of a subject to be dissolved may vary depending on the weight ratio of the solvent included in the mixed solvent, and in the present invention, when the mixed solvent in which the first solvent and the second solvent are mixed at the certain ratio is used, the solubility of the polymer may be maximized as compared with a single solvent.

More specifically, the second solvent may be an aliphatic solvent. Specific examples of the second solvent may include at least one selected from iso-octane, n-decane, n-octane, and methylcyclohexane. Preferably, the second solvent may be methylcyclohexane. The second solvent may be a solvent having a characteristic of maximized precipitation ability of the dissolved polymer in a certain temperature range, but decreased precipitation ability of the dissolved polymer at a temperature out of the certain temperature range. Herein, the certain temperature range may be 0 to 50°C. That is, the second solvent of the present invention may have maximized precipitation ability of the dissolved polymer in a temperature range of 0 to 50°C, but may have relatively decreased precipitation ability of the dissolved polymer at a temperature of, for example, higher than 50°C.

The mixed solvent of the present invention may include the first solvent and the second solvent. Therefore, even in the case of dissolving the polymer and recrystallizing the dissolved polymer using the same mixed solvent, the mixed solvent may have both maximized dissolution function of the polymer and maximized recrystallization function of the dissolved polymer.

Meanwhile, conventionally, a polymer to be obtained is dissolved in a dissolution tank including a good solvent to obtain a polymer solution, and the polymer solution is supplied in a precipitation tank including an antisolvent and recrystallized to obtain a recycled polymer. Herein, the good solvent and the antisolvent are solvents different from each other, and the polymer may have solubility in the good solvent and insolubility in the antisolvent. In this case, after the recycled polymer as a target product is obtained, an additional process for separating the recovered solvent into the good solvent and the antisolvent again, for example, a distillation process, is needed. Thus, an energy amount used in the distillation process may be increased, which may not be preferred from an economic point of view. In addition, since it may be difficult to separate the good solvent and the antisolvent from the recovered solvent, depending on the kinds of good solvent and antisolvent used, it may be difficult to recycle the recovered solvent even with the separate process.

In order to improve the above problem, the present invention uses the mixed solvent including the first solvent and the second solvent. That is, the dissolution tank where dissolution is performed and the precipitation tank where recrystallization may be each supplied with the same solvent as the mixed solvent. Unlike the previous case in which it is essential to separate the recovered solvent for recycling the good solvent and the antisolvent, the present invention uses the same mixed solvent to allow recycling the recovered solvent without an additional process for separating it.

According to an exemplary embodiment of the present invention, a weight ratio between the first solvent and the second solvent in the prepared mixed solvent may be 1:9 to 5:5, specifically 2:8 to 4:6. When the weight ratio of the mixed solvent is within the range, it is in a state in which the first solvent and the second solvent are mixed at an optimal ratio in the mixed solvent. Specifically, though dissolution is performed in the dissolution tank and recrystallization is performed in the precipitation tank using the same mixed solvent, the dissolution of the polymer and the recrystallization of the dissolved polymer may be maximized, by controlling the weight ratio of the mixed solvent, controlling the temperature of the mixed solvent in the dissolution tank, and controlling the temperature of the mixed solvent in the precipitation tank.

Specifically, when the weight ratio between the first solvent and the second solvent in the mixed solvent is more than 5:5, the content of the second solvent which plays an important role in the recrystallization performed in the precipitation tank is decreased, and thus, the recrystallization of the dissolved polymer may not be sufficiently performed. Therefore, the yield of the recycled polymer to be obtained in the present invention may be decreased. When the weight ratio between the first solvent and the second solvent in the mixed solvent is less than 1:9, it may be difficult to maximize the dissolution ability of the first solvent in the mixed solvent, and thus, it may be difficult to achieve the desired level in the present invention in dissolving the polymer in the mixed solvent.

Next, the method of preparing a recycled polymer according to an exemplary embodiment of the present invention may include supplying and dissolving a composite resin in the dissolution tank to obtain a dissolved mixture.

The composite resin is derived from a waste resin, and may be obtained by pretreating the waste resin. The waste resin may be recovered from various products molded using a resin or the composition thereof or the use thereof regardless of whether it is hard or soft. In addition, the composite resin obtained by pretreating the waste resin may be a single kind of polymer containing an additive, or a resin composition in which two or more polymers are blended. Meanwhile, the pretreatment refers to a whole process of treating the waste resin into a state appropriate for being applied to the method of preparing a recycled polymer of the present invention. For example, the pretreatment may be a process of washing the waste resin with a solvent such as water to remove relatively large foreign matter such as dust, drying, and crushing.

The composite resin is not particularly limited, but, for example, when a film shaped waste resin is pretreated to obtain the composite resin, a ratio between the area of the composite resin and the thickness of the composite resin may be 1000:1 to 10:1, 500:1 to 100:1, or 300:1 to 200:1. When the ratio between the area of the composite resin and the thickness of the composite resin is less than 10:1, excessive energy may be used in the pretreatment process of the waste resin for preparing the composite resin as such. When the ratio between the area of the composite resin and the thickness of the composite resin is more than 1000:1, the size of the composite resin is relatively large, and thus, it may take excessive time to supply the composite resin to the dissolution tank and dissolve the resin.

Meanwhile, in order to prepare the recycled polymer in the present invention, the polymer included in the composite resin may include at least one selected from polyethylene and polypropylene. The polyethylene may include high-density polyethylene (HDPE), low-density polyethylene (LDPE), and linear low-density polyethylene (LLDPE), depending on its density. The content of the polymer in the composite resin may be 50 to 90 wt%.

In the present invention, in order to obtain the recycled polymer from the composite resin, the composite resin may be brought into contact with the mixed solvent in the dissolution tank to dissolve the polymer. Herein, the dissolution of the polymer may be performed with stirring of the mixed solvent in the dissolution tank. As such, by bringing the composite resin into contact with the mixed solvent with stirring of the mixed solvent, the composite resin is dispersed in the mixed solvent, so that the polymer may be dissolved more easily. Therefore, a dissolved mixture including the polymer dissolved by the mixed solvent in the dissolution tank may be obtained, and the dissolved mixture may further include insolubles which are not dissolved in the mixed solvent.

Specifically, during the dissolution of the polymer, the mixed solvent in the dissolution tank may have a temperature of 80°C to 130°C, 80°C to 120°C, or 80°C to 100°C. By dissolving the polymer using the mixed solvent at the temperature within the range, the dissolution ability of the first solvent included in the mixed solvent may be maximized. Specifically, though the second solvent included in the mixed solvent may also dissolve the polymer, the function of the first solvent as a dissolution solvent may be maximized as compared with the function of the second solvent to dissolve the polymer, within the temperature range. Therefore, in dissolving the polymer in the mixed solvent at a temperature within the range, the weight ratio between the first solvent and the second solvent included in the mixed solvent may play an important role.

Specifically, when the temperature of the mixed solvent in the dissolution tank is lower than 80°C, it may be difficult for the polymer to be sufficiently dissolved in the mixed solvent, and thus, the yield of the recycled polymer to be obtained in the present invention may be lowered. When the temperature of the mixed solvent in the dissolution tank is higher than 130°C, the temperature of the mixed solvent excessively rises so that other polymers may be dissolved with the polymer to be dissolved in the present invention, and the purity of the finally obtained recycled polymer may be lowered.

The supplying and dissolving of the composite resin in the dissolution tank may be performed for 120 to 300 minutes, which may refer to a time from the point of bringing the composite resin into contact with the mixed solvent in the dissolution tank to the point of dissolving the polymer in the mixed solvent in the dissolution tank.

Subsequently, in the present invention, filtering the dissolved mixture to obtain a polymer solution may be performed. The dissolved mixture may include insolubles as described above, and the dissolved mixture may be filtered to separate the dissolved mixture into insolubles and the polymer solution. Herein, the insolubles may be components which are not dissolved in the mixed solvent, among the components included in the composite resin. Meanwhile, the polymer solution may be a filtrate including the dissolved polymer, in a state of the dissolved mixture from which insolubles are separated. Specifically, the polymer solution may include the mixed solvent and the polymer in a state of being dissolved in the mixed solvent.

In separating the dissolved mixture into insolubles and the polymer solution, filtration in which the dissolved mixture is filtered may be performed. The separation by the filtration may be performed by, for example, one or more of filtration with a filter, filtration by centrifugation, and filtration by settling. In the present invention, separation into insolubles and the polymer solution may be performed by filtration with a filter, and as an example, may be performed using a mesh filter as the filter. The dissolved mixture is filtered by the filtration to separate out insolubles, thereby obtaining the polymer solution.

Meanwhile, the polymer solution obtained by filtering the dissolved mixture may include the dissolved polymer in an amount of 1 wt% or more, 5 wt% or more, or 8 wt% or more and 20 wt% or less, 15 wt% or less, or 13 wt% or less based on the total weight thereof. When the amount of the dissolved polymer included in the polymer solution, that is, the concentration of the polymer solution is less than 1 wt%, the amount of the recycled polymer produced may be decreased due to the low concentration of the polymer in the polymer solution. When the concentration of the polymer solution is more than 20 wt%, the viscosity of the dissolved mixture is greatly increased, and it may be difficult to separate insolubles and the polymer solution from the dissolved mixture.

The method of preparing a recycled polymer according to an exemplary embodiment of the present invention may include supplying the polymer solution in the precipitation tank and performing recrystallization to obtain a precipitated mixture including the recycled polymer.

That is, in the present invention, a dissolution tank performing polymer dissolution and a separate precipitation tank as another member are used to perform recrystallization and precipitation of the polymer dissolved in the polymer solution. Thus, consumption of energy required to lower the temperature for recrystallization of the polymer solution at a high temperature is minimized, and the yield of the finally obtained recycled polymer may be improved.

Specifically, a method of supplying the polymer solution in the precipitation tank may be performed by dropping the polymer solution in the form of droplets to the mixed solvent, and the mixed solvent may be in a stirred state. Thus, the polymer present in a state of being dissolved in the polymer solution, that is, the dissolved polymer may be recrystallized and precipitated in the mixed solvent in the precipitation tank, and this may be the recycled polymer of the present invention. Therefore, the precipitated mixture including the recycled polymer may be obtained by the recrystallization performed in the precipitation tank, and the precipitated mixture may further include the mixed solvent in the precipitation tank and the mixed solvent included in the polymer solution.

According to the present invention, the recycled polymer may include at least one selected from polyethylene and polypropylene.

Meanwhile, the mixed solvent in the precipitation tank is supplied in an amount of 2 to 10 times, specifically 2 to 8 times or 2 to 6 times relative to the polymer solution supplied in the precipitation tank. When the weight of the mixed solvent supplied in the precipitation tank is less than twice the weight of the polymer solution supplied in the precipitation tank, it may be difficult for the mixed solvent to sufficiently show the precipitation ability of the dissolved polymer, in spite of the temperature control of the mixed solvent in the precipitation tank. When the weight of the mixed solvent supplied in the precipitation tank is more than 10 times the weight of the polymer solution supplied in the precipitation tank, the amount of the mixed solvent used in the precipitation tank is excessively increased, which may be not preferred in terms of an economic aspect.

In addition, the mixed solvent in the precipitation tank to which the polymer solution is introduced may have a temperature of 0°C to 50°C, 0°C to 30°C, or 10°C to 20°C. When the recrystallization is performed in the mixed solvent at the temperature within the range, the temperature of the mixed solvent in the precipitation tank is lower than the temperature of the mixed solvent in the dissolution tank, and thus, the recrystallization of the dissolved polymer may be easily performed. In addition, in performing recrystallization, when the mixed solvent at a temperature within the range is used, the dissolution ability of the first solvent may be decreased, and the precipitation ability of the second solvent may be promoted, which are included in the mixed solvent. Therefore, the precipitation ability of the second solvent depending on the temperature may play a more important role within the temperature range.

Specifically, when the temperature of the mixed solvent in the precipitation tank is lower than 0°C, a separate cooling device should be provided for controlling the temperature, and thus, energy usage may be increased. When the temperature of the mixed solvent in the precipitation tank is higher than 50°C, the precipitation ability of the second solvent in the mixed solvent is decreased, and thus, it may be difficult for the dissolved polymer to be recrystallized and the recrystallization rate may also be decreased. Therefore, the yield of the recycled polymer to be obtained in the present invention may be decreased.

According to an exemplary embodiment of the present invention, preparation of the mixed solvent including the first solvent and the second solvent may include recovering the mixed solvent from the precipitated mixture. The recovery of the mixed solvent from the precipitated mixture may be a series of processes of recovering the mixed solvent included in the precipitated mixture for recycling the mixed solvent.

According to the present invention, the recovery of the mixed solvent from the precipitated mixture does not involve fractional distillation. The fractional distillation is distillation performed for separating a liquid mixture including two or more liquids into each liquid, and since the mixed solvent is used in the present invention, the fractional distillation may not be involved in recovering the mixed solvent. Specifically, since the mixed solvent including the first solvent and the second solvent is used in dissolving the polymer and recrystallizing the dissolved polymer in the present invention, the mixed solvent does not need to be separated into the first solvent and the second solvent.

Specifically, the recovery of the mixed solvent from the precipitated mixture may be performed by including separation of the recycled polymer and the mixed solvent and drying of the separated recycled polymer.

First, the separation into the recycled polymer and the mixed solvent may refer to a process of separating the precipitated mixture into the recycled polymer and the mixed solvent. More specifically, the separation into the recycled polymer and the mixed solvent may be performed in the same manner as in the filtration of filtering the dissolved mixture described above. Therefore, separation into the recycled polymer and the mixed solvent may be performed by, as an example, filtration of the precipitated mixture with a filter. As such, the separated target product (recycled polymer) may be obtained by separation into the recycled polymer and the mixed solvent, and the mixed solvent used during the process may be recovered and recycled.

Meanwhile, drying of the separated recycled polymer may be performed by drying the recycled polymer separated from separation into the recycled polymer and the mixed solvent to finally obtain the recycled polymer. Specifically, though the recycled polymer and the mixed solvent are separated in the separation into the recycled polymer and the mixed solvent described above, some mixed solvents may remain in the chains of the separated recycled polymer. That is, the separated recycled polymer may include the remaining mixed solvent. The amount of the mixed solvent remaining in the separated recycled polymer may be 30 wt% to 200 wt% to 100 wt% of the separated recycled polymer. Therefore, in order to separate and recover the solvent remaining in the separated recycled polymer, drying of the separated recycled polymer may be performed. The drying may be performed by heating by hot air or heat condition, and performed in a flow drying device. The flow drying device may be a device of drying a subject to be dried with flowing by hot air or a device, and for example, may be a kneader reactor. When drying is performed in the kneader reactor, a separate solvent recovery device for recovering the remaining mixed solvent from the separated recycled polymer may be connected to the kneader reactor. Therefore, the remaining mixed solvent may be further recovered by the drying, and the recycled polymer after drying the remaining mixed solvent may be obtained with high purity.

As such, the mixed solvent is recovered from the separation into the recycled polymer and the mixed solvent and the drying of the separated recycled polymer, and then recycled, thereby minimizing the amount of mixed solvent lost during the process, and the amount of the fresh first solvent and/or second solvent supplied for supplement lost may be very small.

According to an exemplary embodiment of the present invention, the weight ratio between the first solvent and the second solvent in the prepared mixed solvent may be the same as the weight ratio between the first solvent and the second solvent in the recovered mixed solvent. Specifically, since most mixed solvent is recovered by the filtration and the mixed solvent remaining in the separated recycled polymer is recovered by drying, without performing a separate fractional distillation process in order to recover the mixed solvent from the precipitated mixture in the present invention, the weight ratio may be maintained to be the same. Therefore, the recovered mixed solvent may be supplied in the dissolution tank and the precipitation tank and recycled.

Meanwhile, when the good solvent is used in dissolution and the antisolvent is used in recrystallization as before, a separate fractional distillation process for separating the good solvent and the antisolvent from the recovered solvent after finally obtaining the recycled polymer, for example, a distillation tower, needs to be provided. However, since the separation in the dissolution tank is not precisely performed, when some antisolvents are supplied in the dissolution tank for performing dissolution with the good solvent separated from the distillation tower, the solubility of the polymer may be significantly decreased only with some antisolvents supplied in the dissolution tank.

From this perspective, in the present invention, the mixed solvent having a controlled weight ratio between the first solvent and the second solvent acts at a temperature for performing dissolution of the polymer and the temperature for performing recrystallization of the polymer, thereby reusing the recovered mixed solvent without additional separation while obtaining the recycled polymer at a yield similar to the conventional yield. Thus, the present invention may simplify process equipment and be preferred in terms of energy use.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### Example 1

A mixed solvent in which a first solvent (toluene) and a second solvent (methylcyclohexane) were mixed at a weight ratio of 3:7 was prepared. 20 ml of the mixed solvent at 100°C was supplied in a dissolution tank, and 100 ml of the mixed solvent at 20°C was supplied in a precipitation tank.

A composite resin sample (6.45 g) including 77.89 wt% of polyethylene was supplied in the dissolution tank, and dissolved for 180 minutes with stirring to obtain a dissolved mixture.

Thereafter, the dissolved mixture was filtered with a mesh filter to obtain a polymer solution from which insolubles were separated. At this time, the concentration of the polymer solution was 20 wt%.

Subsequently, the polymer solution was supplied in the precipitation tank in which the mixed solvent was being stirred. At this time, the polymer solution was added dropwise at an addition amount of 5 ml/min. At this time, the weight of the mixed solvent supplied in the precipitation tank was 4 times the total weight of the polymer solution to be added to the precipitation tank. Thus, polyethylene which was dissolved in the polymer solution was recrystallized in the mixed solvent in the precipitation tank. Finally, the precipitated mixture including the recycled polymer (polyethylene) was obtained.

The precipitated mixture was added to a mesh filter, and separated into a recycled polymer (polyethylene) and the mixed solvent. The separated recycled polymer (polyethylene) was added to a kneader reactor and dried at 120°C, thereby separating the mixed solvent remaining in the separated recycled polymer (polyethylene) and finally obtaining the recycled polymer. Meanwhile, the mixed solvent separated from the mesh filter and the kneader reactor was recovered and recycled.

### Example 2

The procedures of Example 1 were repeated except that a mixed solvent in which the first solvent and the second solvent were mixed at a weight ratio of 5:5 was used, thereby preparing a recycled polymer.

### Example 3

The procedures of Example 1 were repeated except that a mixed solvent in which the first solvent and the second solvent were mixed at a weight ratio of 1:9 was used, thereby preparing a recycled polymer.

### Comparative Example 1

The procedures of Example 1 were repeated except that toluene was prepared as a single solvent, not as the mixed solvent, and 20 ml of toluene at 100°C was supplied in the dissolution tank and 100 ml of toluene at 20°C was supplied in the precipitation tank, thereby preparing a recycled polymer.

### Comparative Example 2

The procedures of Example 1 were repeated except that methyl cyclohexane (MCH) was prepared as a single solvent, not as the mixed solvent, and 20 ml of MCH at 100°C was supplied in the dissolution tank and 100 ml of MCH at 20°C was supplied in the precipitation tank, thereby preparing a recycled polymer.

### Comparative Example 3

A mixed solvent in which a first solvent (toluene) and a second solvent (methylcyclohexane) were mixed at a weight ratio of 3:7 was prepared. 20 ml of the mixed solvent at 100°C was supplied in the dissolution tank.

6.45 g of a composite resin sample including 77.89 wt% of polyethylene was supplied in the dissolution tank, and dissolved for 180 minutes with stirring to obtain a dissolved mixture.

Thereafter, the dissolved mixture was filtered with a mesh filter to obtain a polymer solution from which insolubles were separated. At this time, the concentration of the polymer solution was 20 wt%.

The polymer solution was cooled from 100°C to 20°C, thereby recrystallizing polyethylene dissolved in the polymer solution. Finally, the precipitated mixture including the recycled polymer (polyethylene) was obtained.

The precipitated mixture was added to a mesh filter, and separated into a recycled polymer (polyethylene) and the mixed solvent. The separated recycled polymer (polyethylene) was added to a kneader reactor and dried at 120°C, thereby separating the mixed solvent remaining in the separated recycled polymer (polyethylene) and finally obtaining the recycled polymer.

The following Table 1 shows the yield of the recycled polymers finally obtained in the examples and the comparative examples.

**[Table 1]**

| | Kind of solvent | Weight ratio of mixed solvent¹⁾ | Use of precipitation tank for cooling of polymer solution | Yield (%) of recycled polymer²⁾ |
|---|---|---|---|---|
| Example 1 | Mixed solvent (toluene + methylcyclohexane) | 3:7 | ○ | 97.1 |
| Example 2 | Mixed solvent (toluene + methylcyclohexane) | 5:5 | ○ | 91.4 |
| Example 3 | Mixed solvent (toluene + methylcyclohexane) | 1:9 | ○ | 92.9 |
| Comparative Example 1 | (Toluene) Single solvent | - | ○ | 84.8 |
| Comparative Example 2 | (Methylcyclohexane) Single solvent | - | ○ | 86.7 |
| Comparative Example 3 | Mixed solvent (toluene + methylcyclohexane) | 3:7 | × | 56.7 |
| ¹⁾ The weight ratio of the mixed solvent is a weight ratio between toluene and methylcyclohexane in the mixed solvent. | | | | |
| ²⁾ The yield of the recycled polymer is the weight of the finally obtained recycled polymer (polyethylene) to the weight of polyethylene included in the composite resin, expressed as a percentage. | | | | |

From Table 1, it was confirmed that the yields of the recycled polymers of the examples were significantly higher than those of the comparative examples. Thus, it was confirmed that the action of the mixed solvent was maximized in performing dissolution and recrystallization, by using the mixed solvent including the first solvent which is excellent in dissolution and the second solvent which is easy for recrystallization, and the amount of the finally obtained recycled polymer was increased.

In Comparative Example 1 in which only the first solvent (toluene) was used, not the mixed solvent like the examples, it was difficult to perform the recrystallization well by the use of the first solvent alone in recrystallizing the dissolved polymer, and thus, the yield of the final recycled polymer was the lowest.

In Comparative Example 2 in which only the second solvent (methylcyclohexane) was used as a single solvent, the amount of the recrystallized recycled polymer was increased as compared with Comparative Example 1 using only the first solvent by using the second solvent which is easy for recrystallization, but the yield of the recycled polymer was significantly decreased as compared with the examples using the mixed solvent.

In Comparative Example 3 in which the polymer solution obtained by dissolving the polymer in the mixed solvent as in Example 1 was cooled by itself as it, without adding dropwise to the precipitation tank. Thereby, crystal particles were formed finely in the recrystallization process, so that it was difficult to separate polymer crystals and the solvent, and thus, the yield of the final recycled polymer was lowered. In addition, energy consumption was increased in the process of cooling the polymer solution at a high temperature (100°C) obtained in the dissolution step into 20°C.

## Claims

1. A method of preparing a recycled polymer, the method comprising:
preparing a mixed solvent including a first solvent and a second solvent and supplying the mixed solvent in each of a dissolution tank and a precipitation tank;
supplying and dissolving a composite resin in the dissolution tank to obtain a dissolved mixture;
filtering the dissolved mixture to obtain a polymer solution; and
supplying the polymer solution in the precipitation tank and performing recrystallization to obtain a precipitated mixture including a recycled polymer.

2. The method of preparing a recycled polymer of claim 1, wherein the recycled polymer includes at least one selected from polyethylene and polypropylene.

3. The method of preparing a recycled polymer of claim 1, wherein the mixed solvent supplied in the dissolution tank has a temperature of 80 to 130°C, and
the mixed solvent supplied in the precipitation tank has a temperature of 0 to 50°C.

4. The method of preparing a recycled polymer of claim 1, wherein the first solvent includes at least one selected from o-xylene, m-xylene, p-xylene and toluene, and
the second solvent includes at least one selected from iso-octane, n-decane, n-octane and methylcyclohexane.

5. The method of preparing a recycled polymer of claim 1, wherein a weight ratio between the first solvent and the second solvent in the prepared mixed solvent is 1:9 to 5:5.

6. The method of preparing a recycled polymer of claim 1, wherein the first solvent is toluene, and
the second solvent is methylcyclohexane.

7. The method of preparing a recycled polymer of claim 1, wherein the polymer solution obtained by filtering the dissolved mixture includes the polymer in an amount of 1 to 20 wt% based on the total weight thereof.

8. The method of preparing a recycled polymer of claim 1, wherein the mixed solvent in the precipitation tank is supplied in an amount of 2 to 10 times relative to the polymer solution supplied in the precipitation tank.

9. The method of preparing a recycled polymer of claim 1, wherein the preparing of the mixed solvent including a first solvent and a second solvent includes recovering the mixed solvent from the precipitated mixture.

10. The method of preparing a recycled polymer of claim 9, wherein the recovering of the mixed solvent from the precipitated mixture is performed by procedures including separation into the recycled polymer and the mixed solvent and drying of the separated recycled polymer.

11. The method of preparing a recycled polymer of claim 9, wherein the recovering of the mixed solvent from the precipitated mixture does not involve fractional distillation.

12. The method of preparing a recycled polymer of claim 9, wherein a weight ratio between the first solvent and the second solvent in the prepared mixed solvent is the same as the weight ratio between the first solvent and the second solvent in the recovered mixed solvent.
